# EUROPEAN PATENT SPECIFICATION

(11) **EP 4 133 331 B1**
(45) Date of publication and mention of the grant of the patent: **03.06.2026**
(21) Application number: 21800343.2
(22) Date of filing: 04.05.2021
(51) Int. Cl.: G02F 1/167, G02F 1/16757, G02F 1/1675

(54) **MICROSPHERES FOR ELECTROPHORETIC DISPLAYS AND METHODS OF MANUFACTURE THEREOF**
MIKROKUGELN FÜR ELEKTROPHORETISCHE ANZEIGEN UND VERFAHREN ZU IHRER HERSTELLUNG
MICROSPHÈRES POUR ÉCRANS ÉLECTROPHORÉTIQUES ET PROCÉDÉS DE FABRICATION ASSOCIÉS

(30) Priority: 04.05.2020 US 202063019648 P
(43) Date of publication of application: 15.02.2023
(73) Proprietor: Halion Displays Inc., Kitchener, Ontario N2G 1H6 (CA)
(72) Inventor: MARCHEWKA, Ryan Phillip, Waterloo, Ontario N2J 1P9 (CA); LAVRISA, Matthew Thomas, Ottawa, Ontario K2L 2V1 (CA); WONG, Ka Ho, Waterloo, Ontario N2L 6J5 (CA); NASSAB, Yahia, Mississauga, Ontario L5V 1Y5 (CA); PINCHIN, Natalie Prislinger, Brampton, Ontario L6Y 2C3 (CA); CHATHANAT, Simran Elizabeth, Markham, Ontario L6C 1Y5 (CA); LIU, Simon, Richmond Hill, Ontario L4B 3C2 (CA)
(74) Representative: Richardt Patentanwälte PartG mbB
(86) International application number: PCT/IB2021/053755
(87) International publication number: WO 2021/224800

(56) References cited:
- EP-B1- 0 968 457
- US-A- 6 017 584
- US-A1- 2004 054 031
- US-A1- 2005 152 017
- US-A1- 2018 284 489

## Description

### FIELD

The specification relates generally to display panel technologies, and more particularly to microspheres for electrophoretic displays and methods of manufacture thereof.

### BACKGROUND

Various technologies are employed in the manufacture of display panels. Some, e.g. liquid crystal and electrowetting displays, suffer from optical losses, leading to inefficient use of backlight. Others, such as electrochromic displays, suffer from slow response times and increased voltage requirements to drive pixels compared to LCD and electrowetting displays. US2004/054031A1 discloses Electronically addressable microencapsulated ink and display thereof.

### SUMMARY

Technical features of the invention are specified in the appended claims. According to an aspect of the present specification, a display device including microspheres is provided, as defined in appended claim 1.

According to another aspect of the present specification, a method of fabricating microspheres for a transmissive electrophoretic display is provided, as defined in appended claim 9.

According to another aspect of the present specification, a method of fabricating a transmissive electrophoretic display device is provided, as defined in appended claim 20.

### BRIEF DESCRIPTION OF DRAWINGS

Implementations are described with reference to the following figures, in which:
FIG. 1A depicts an example electrophoretic display device including microspheres;
FIG. 1B depicts a microsphere in the electrophoretic display device of FIG. 1;
FIG. 2 depicts a portion of the lattice of microspheres in the electrophoretic display device of FIG. 1 under operational conditions;
FIG. 3 depicts another example electrophoretic display device including layers of microspheres;
FIG. 4 depicts a flowchart of an example method of fabricating microspheres;
FIGS. 5A and 5B depict an example performance of block 410 of the method of FIG. 4;
FIG. 6 depicts an example method of fabricating an electrophoretic display device; and
FIGS. 7A and 7B depict an example performance of block 625 of the method of FIG. 6.

### DETAILED DESCRIPTION

The description below sets out certain structures and methods of manufacture for display assemblies employing electrophoretic media to control the color, contrast, and other visual attributes of the display assembly. A detailed discussion of the electrophoretic media is provided in PCT application no. PCT/IB2019/058306 filed September 30, 2019.

In brief, in some embodiments, the electrophoretic media includes two sets of nanoparticles. The particles in the first set include a negatively charged core and a polymeric corona functionalized with an optically active component. The particles in the second set include a positively charged core and a polymeric corona functionalized with a stabilizing component. The charge of the particles can be switched without loss of generality. The two component entities are selected to interact with one another when a positively charged nanoparticle is sufficiently close to a negatively charged nanoparticle and their polymeric coronae interact. When the component entities interact, they form a complex with different absorption characteristics than the separated components. For example, when separated the nanoparticles may be substantially transparent, and when physically close enough for the component entities to interact the nanoparticles may transmit certain wavelengths of light (e.g. red) and absorb others.

Thus, by controlling electric fields applied to a fluid containing nanoparticles from both of the above-mentioned sets, the separation distance between the nanoparticles can be controlled, which affects how many of the nanoparticles interact and therefore the degree to which the optical characteristics of the fluid are altered. A variety of materials, as well as additional discussion on the behavior of such materials, are provided in the above-mentioned co-pending PCT application.

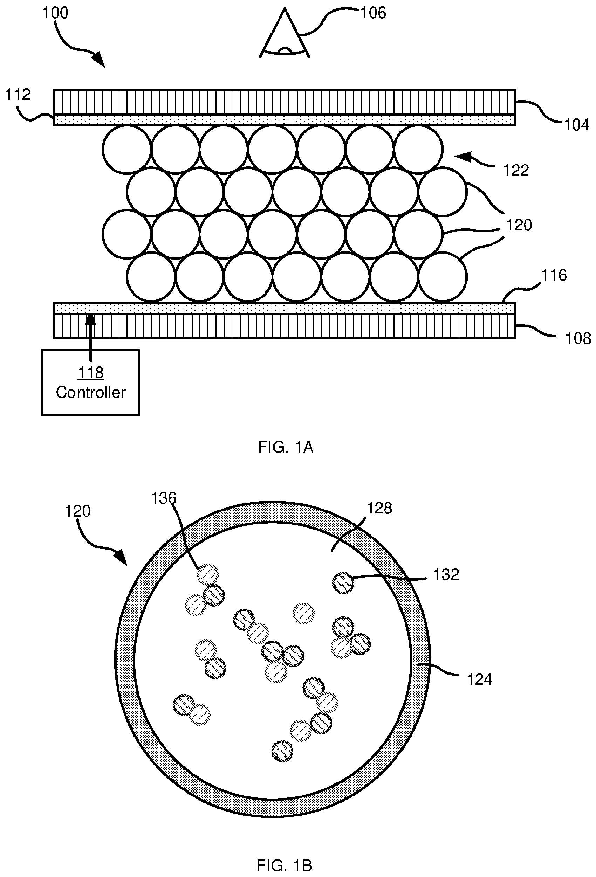

FIG. 1A depicts an example display device 100 employing the above-mentioned electrophoretic media. The display device 100 (also referred to herein as simply device 100) includes an outer substrate 104 (e.g., glass or another suitable translucent or transparent material), referred to as "outer" due to its position away from the interior of the display device 100 and towards a viewer (indicated by the symbol 106). The interior of the display device 100 may house electronics or other control components for the display device 100. The device 100 also includes an inner substrate 108, the inner substrate 108 may be transparent or translucent. The substrates 104 and 108 are arranged substantially parallel to one another, and substantially perpendicular to the direction of viewing.

Between the inner and outer substrates 108 and 104, the device 100 includes an outer electrode layer 112 and an inner electrode layer 116 (also referred to herein as simply electrodes 112 and 116). The electrodes 112 and 116 may be formed of indium tin oxide (ITO) film. Other materials, such as silver nanowires, may also be employed in addition to or instead of ITO. The outer electrode 112 is translucent or transparent, to allow the passage of ambient light into the assembly 1700 for absorption, or transmission.

The electrodes 112 and 116 are disposed in a spaced-apart relationship relative to each other. In particular, the outer electrode 112 may be adjacent to the outer substrate 104, and in the present example is directly affixed to the inner side of the outer substrate 104. In other examples, additional materials (e.g., adhesives) may be placed between the outer substrate 104 and the outer electrode 112. Similarly, the inner electrode 116 may be adjacent to the inner substrate 108 and may be affixed to the inner substrate 108. The inner electrode 116 is translucent or transparent (e.g., an ITO film or an array of silver nanowires). In other examples, the electrodes 112 and 116 may be arranged in a spaced-apart relationship laterally on the display, each extending from the inner substrate 108 to the outer substrate 104. In such examples, the electrodes may be made of a transparent conductive material.

One of the electrodes 112 and 116 is driven by a controller 118 (e.g., connected to the internal electronics of a computing device such as a smartphone or the like), while the other of the electrodes 112 and 116 is a reference electrode.

Between the electrodes 112 and 116, the device 100 includes a plurality of microspheres 120 (referred to generically as a microsphere 120 and collectively as microspheres 120). Preferably, the microspheres 120 are of about the same size, for example, having a dispersity index of between about 1 and 1.2. The microspheres 120 are generally arranged in a lattice between the first and second electrodes. For example, the lattice may be a face-centered cubic packing arrangement, or a hexagonal close packing arrangement, or a combination of the two (i.e., the lattice may be imperfect), or other lattices. The microspheres 120 may be suspended, in some examples, in a suspension fluid 122.

In some examples, the device 100 may further include inner and outer dielectric layers (not shown) between the electrodes 112 and the microspheres 120 to prevent the hydrolysis of the suspension fluid 122 by the electrodes 112 and 116. The device 100 may further include one or more spacer beads (not shown) between the electrodes 112 and 116 to promote uniform spacing of the substrates 104 and 108 as well as the electrodes 112 and 116.

Referring to FIG. 1B, a microsphere 120 is depicted in greater detail. Each microsphere 120 includes a spherical shell 124 enclosing an electrophoretic media 128. The electrophoretic media 128 enclosed in the spherical shell 124 contains the above-mentioned charged nanoparticles 132 and 136 comprising first and second chemical entities.

Specifically, the charged nanoparticles 132 and 136 have opposite charges and comprise complementary chemical entities which may be induced to reversibly interact to switch between a separated state and an optically active state in response to a change in an applied electromagnetic field. More particularly, the first and second electrodes 112 and 116 may be controlled to apply an electromagnetic field to the microspheres 120 to change an optical property of the electrophoretic media 128 contained in the microspheres 120.

Each microsphere 120 has a diameter of between about 100 nm to about 20 µm, and preferably between about 300 nm to about 1 µm. In other examples, the diameter of the microspheres 120 may be smaller than 100 nm or larger than 20 µm. The shell 124 of each microsphere has a thickness of between about 5 nm and about 80 nm. The shell 124 may be made of a solid material which is relatively rigid and has a high dielectric constant at low frequency to reduce the voltage drop across the shell material. In particular, the shell 124 is of sufficient width to be substantially nonporous and resistant to mechanical stresses imposed during manufacture and use of the device 100. For example, the shells 124 may be formed of a ceramic or glass material, such as a silica-titania blend. Other suitable materials for forming the shells, such as urea-formaldehyde, may also occur to those skilled in the art.

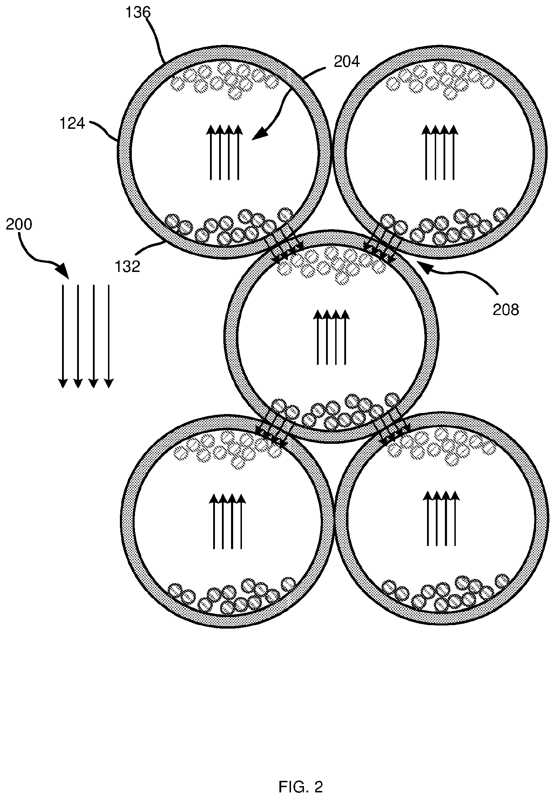

Referring now to FIG. 2, a portion of the lattice of microspheres 120 is depicted under operational conditions of the device 100. The electrodes 112 and 116 are controllable by a controller 118, which applies a voltage difference to the electrodes 112 and 116 to generate an electric field 200 between the electrodes 112 and 116 across the microspheres 120. The oppositely charged nanoparticles 132 and 136 move to opposite sides of the interior of the microsphere 120 but are contained within the shell 124. The electric field 200 controls the separation between oppositely charged nanoparticles in each microsphere 120 and therefore controls the absorption spectra (and thus the visual appearance) of the electrophoretic media 128 in the microspheres 120. The migration of the nanoparticles 132 and 136 in response to the application of the electric field 200 causes their own opposing induced electric field 204. Additionally, the proximity of the oppositely charged particles 132 and 136 in adjacent microspheres causes inter-microsphere induced electric fields 208. The attraction of oppositely charged particles through the shells 124 and the inter-microsphere induced electric fields 208 promotes a better separation of the oppositely charged particles 132 and 136 with a lower applied electric field, and thus lowers the voltage requirements of the display device 100.

The inclusion of the microspheres 120 in the display device 100 increases the display quality of the display device 100. For example, if the microspheres 120 are provided in substantial quantities to provide multiple layers of the nanoparticles, the contrast of the device 100 is increased as compared to a single layer of nanoparticles. Specifically, by having multiple layers of particles the number of color absorbing groups through which an incident light ray would pass on its way through the display 100 is increased. The thickness of the display device 100, as defined by the distance between the substrates 104 and 108 may be varied to increase or decrease the contrast provided by the microspheres 120. Specifically, incident light will traverse a larger volume of the electrophoretic media when the thickness of the device 100 increases. The increased thickness and traversal of a larger volume of the electrophoretic media provides for better color absorption, and hence better reflection of the desired colors.

The microspheres 120 also improve the uniformity of the display device 100. For example, the microspheres contain oppositely charged particles 132 and 136 which move in response to the applied electric field 200 and would move along the electric potential gradient, which in some instances may be laterally towards adjacent electrodes, changing the concentration of oppositely charged particles 132 and 136 in different regions of the display device 100. The microspheres 120 restrict this lateral movement, maintaining a substantially uniform distribution across the display device 100. In other words, the microspheres reduce the migration of the electrophoretic media and accumulation of the electrophoretic media in one region of the display device 100 and a lack or depletion of the electrophoretic media in a different region. Accordingly, by employing the microspheres containing the electrophoretic media, each section of the display device 100 will include substantially the same amount of electrophoretic media, dispersed evenly within the microspheres 120.

In some examples, the first and second electrodes 112 and 116, and the microspheres 320 contained therein may form a sub-pixel assembly. That is, the display device 100 may include multiple of such assemblies, for example arranged in a rectangular array, wherein each sub-pixel assembly represents one pixel or part of one pixel of the display device 100. In other examples, the sub-pixel assemblies may be arranged in other suitable arrangements. Thus, a complete display may include a plurality of the sub-pixel assemblies, with each assembly including a pair of spaced apart electrodes to control the electrophoretic media in the microspheres of each pixel (or sub-pixel) independently to allow for regular display capabilities. In some examples, each assembly may include a respective controller 118 and each controller 118 may be connected to a central display processor of the display device 100. That is, the central display processor may communicate with the controllers 118 to apply appropriate voltages to the electrodes 112 and 116 of each assembly according to the image to be displayed on the device 100. In other examples, the central display processor may control the sub-pixel assemblies directly (i.e., the central display processor may act as the controller 118 for each sub-pixel assembly).

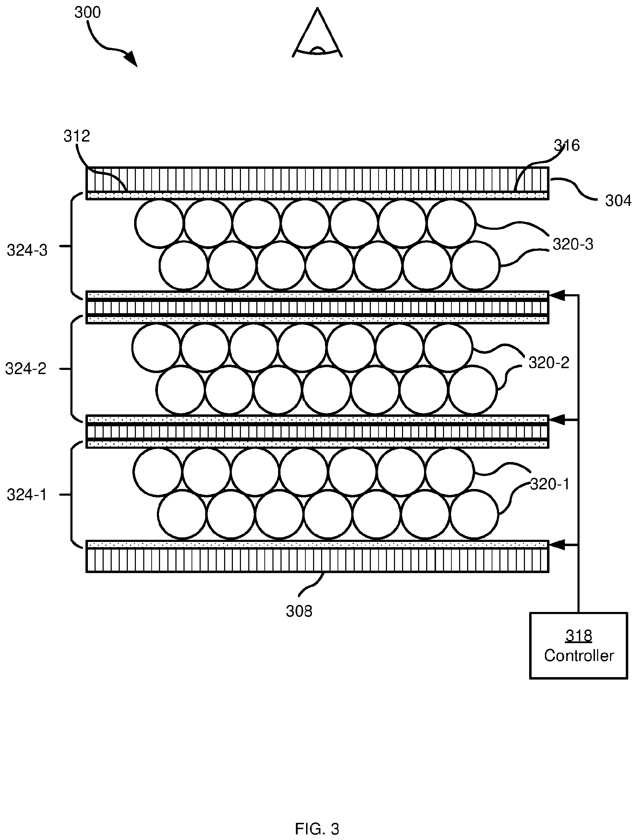

In some examples, the microspheres 120 may be contained in multiple layer structures, and multiple layer structures may be included in the display 100 to allow for different colors to be provided in each layer structure. For example, referring to FIG. 3, another example display device 300 is depicted. The display device 300 is similar to the display device 100, and includes an outer substrate 304, an inner substrate 308, and a plurality of microspheres 320. The device 300 further includes three-layer structures 324-1, 324-2, and 324-2. In particular, the first layer structure 324 contains microspheres 320-1 between first inner and outer electrodes 312-1 and 316-1, the second layer structure 324-2 contains microspheres 320-2 between second inner and outer electrodes 312-2 and 316-2, and the third layer structure 324-3 contains microspheres 320-3 between third inner and outer electrodes 312-3 and 316-3. The device 300 may further include a controller 318 configured to drive a respective one of the inner and outer electrodes 312 and 316 in each layer. For example, each layer structure 324 may be configured to produce a different color (i.e., based on the optical properties of the particles contained in the microspheres in each layer), and hence each controller 318 would drive the respective electrodes 312 and 316 according to the color requirements for a given image. In other examples, each layer 324 may be coupled to a separate controller to control the respective electrodes 312 and 316 independently. As will be appreciated, the sub-pixel assembly structure may also be applicable to the display device 300 of FIG. 3, wherein a sub-pixel assembly is formed of the layer structures 324, and the inner and outer electrodes 312 and 316, and the microspheres 320 contained therein.

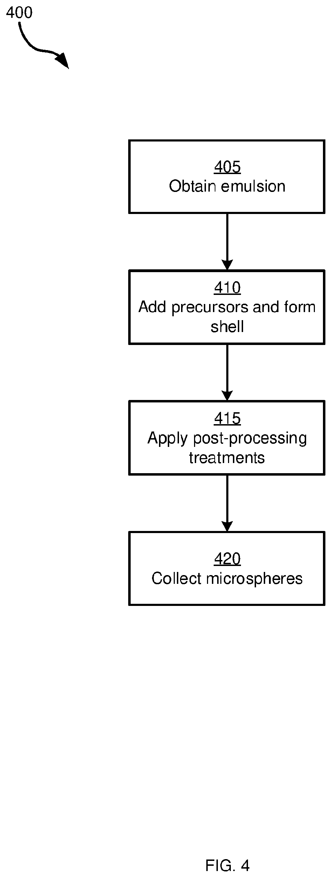

Turning now to FIG. 4, an example method 400 of fabricating microspheres, such as the microspheres 120, is depicted.

The method 400 begins at block 405, at which a water-in-oil emulsion is obtained. In particular, the aqueous phase of the emulsion includes aqueous droplets containing water and electrophoretic nanoparticles. For example, the electrophoretic particles may be synthesized in water, and additives may be added to make up the aqueous phase. The electrophoretic particles, being electrically charged, will typically approximately uniformly disperse in the aqueous phase, allowing for an approximately uniform distribution of the electrophoretic particles in the droplets of the resulting water-in-oil emulsion. In some examples, the aqueous phase may further include one or more polar cosolvents, catalysts, thickening agents and non-ionic surfactants. The oil phase may comprise a solvent such as cyclohexane, polyoxyethylene sorbitan monooleate, polyisoprene, combinations of the above, or the like, as well as non-ionic surfactants and thickening agents contained therein. Preferably, the aqueous droplets have a dispersity index of between about 1 and about 1.2. That is, the aqueous droplets are preferably around the same size.

For example, to obtain a monodisperse emulsion, a course emulsion may first be obtained by adding the aqueous phase to the oil phase in the presence of a surfactant. The volume fraction of the aqueous phase may be between about 50% to about 75% of the total volume of the emulsion. The coarse emulsion may then be sheared into smaller aqueous droplets of nearly uniform size by methods known in the art. For example, the coarse emulsion may be subjected to a high-shear Couette flow to fracture the aqueous phase into the aqueous droplets, or the coarse emulsion may be passed through a homogenizer, one or more porous membranes, microfluidics devices or the like. In some examples, multiple passes and/or multiple shearing methods may be applied to obtain the desired size and size dispersity. Specifically, the aqueous droplets of the emulsion form a template on which the shells 124 of the microspheres 120 are formed. Accordingly, the droplets preferably have a size of between about 300 nm and about 1 µm, and a low size dispersity (i.e., between about 1 and 1.2)

At block 410, precursors are added to the emulsion. The precursor is generally a compound configured to react with the aqueous droplets to form the shells 124 of the microspheres 120. For example, the precursors may be organometallic precursors such as a mixture of tetramethyl orthosilicate (TMOS) [3-(2-Aminoethylamino)propyl]trimethoxysilane (AEAPTMS) and titanium tetrapropoxide (TTIP). More generally the precursors are selected according to the desired shell material for the microspheres 120. The precursors may be added to the emulsion over a predefined period of time. For example, the precursors may be added dropwise to the emulsion over the course of about 2 minutes. More generally precursors may be added to the emulsion slowly to reduce concentration gradients and reduce the likelihood of the microspheres combining and growing together and promote the growth of separate capsules. Further, the emulsion and precursors may be mixed in order to better disperse the precursors in the emulsion to further promote the growth of separate capsules.

When the precursors are added to the emulsion, they reach the surface of the aqueous droplets and are hydrolyzed by the water phase and undergo condensation reactions to form the shell 124. For example, the organometallic precursors may form metal-oxygen-metal bonds, which begin to connect to form a network of glass-like material around the aqueous droplets. In other examples, the precursors may react with the aqueous droplets in a different manner to form the shells 124. For example, polymeric precursors may undergo condensation. Once the surface of a droplet is covered, the reaction becomes diffusion-limited by how quickly the water and precursors can come into contact through the newly formed barrier. Further, as the thickness of the shell 124 increases during formation, the water and/or precursor must diffuse through the existing shell 124 to continue reacting, slowing the reaction down where the shell 124 is thicker. Conversely, the reaction may occur more quickly in regions where the shell 124 is thinner or non-existent. The diffusion-limiting nature of the reaction therefore provides better uniformity in the thickness of the shell 124 around any given droplet and between droplets.

A mixture of different precursors may be added to change the properties of the shell, the reaction rate, and the surface morphology of the shell. For example, elements such as titanium may be used as an additive to increase the dielectric constant of the material, which reduces the voltage drop across the shell. Different precursors may be used to tune the refractive index of the shells so that depending on the choice of suspension fluid 122 and electrophoretic dispersion 128 the shells scatter less of the light incident upon them. For example, the refractive index of the shells 124 may be selected to match the refractive index of the suspension fluid 122, which in turn may be selected to match the refractive index of the electrophoretic dispersion 128. By matching the refractive indices of the shell 124, the suspension fluid 122, and the electrophoretic dispersion 128, each microsphere 120 will scatter less light and overall haze caused by light scattering is reduced.

In some examples, the aqueous droplets and the oil phase may include other components to promote and facilitate the formation of the shell. For example, the aqueous droplets may include a catalyst (e.g., ammonia, in the example given above) to catalyze the shell-formation reactions (e.g., hydrolysis is catalyzed by ammonia, in the example given above). The aqueous droplets and/or the oil phase may further include thickening agents to control the rate of reaction. In particular, thickening agents decrease the diffusion of the precursors to the shell interface, thus slowing down the reaction and allowing the shells 124 to form more uniformly. The oil phase may also include other components to deter the aggregation of the aqueous droplets. For example, long-chain oil soluble polymers, such as polyisoprene, or hydrophobic polymeric nanoparticles can help maintain a hydrophobic barrier between colliding particles. Polymeric surfactants such as poly isoprene-block-vinyl alcohol can be used for steric stabilization of the droplets, which absorb kinetic energy of the droplets when they collide, increasing their resistance to coalescence. After adding the precursors, the emulsion may be agitated (e.g., by stirring) and allowed to react for a predefined period of time (e.g., between about 2 minutes and about 24 hours).

In some examples, prior to adding the precursors to the emulsion, the emulsion may first be diluted to add additional oil phase. For example, the formation of the shell 124 by the precursors may generate alcohols which may affect the aqueous droplet stability. In particular, the alcohols may destabilize the emulsion, causing inversion to an oil-in-water emulsion if the dispersed phase (aqueous) makes up too high of a fraction of the total. Accordingly, dilution of the emulsion (e.g., by a factor of between about 4 times and more than 20 times) may assist in the stabilization of the aqueous droplets after the generation of the alcohols. Further, the emulsions may be diluted to promote uniform coating of the droplets, for example to reduce particle aggregation which may decrease diffusion of the precursors.

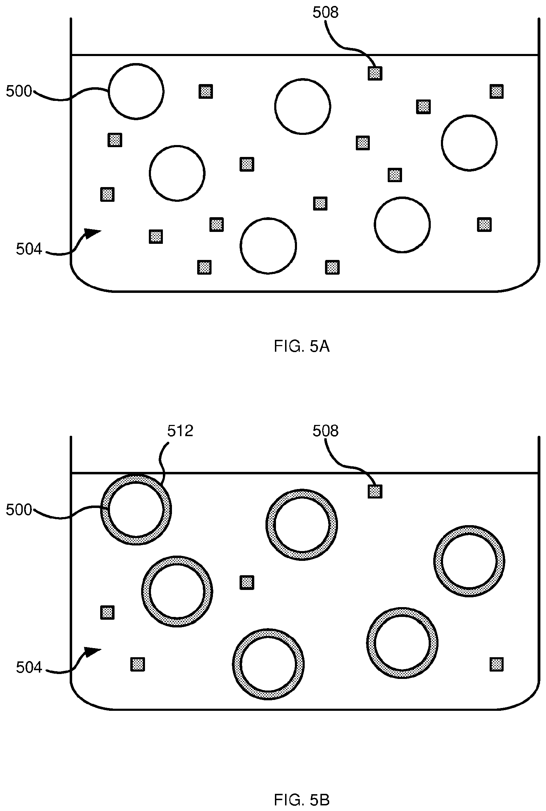

For example, referring to FIGS. 5A and 5B, an example performance of block 410 is depicted. In FIG. 5A, monodisperse aqueous droplets 500 are dispersed in an oil phase 504. Precursors 508 are added to the oil phase. In FIG. 5B, the precursors have diffused to the surface of the droplets 500 and have formed shells 512 around the droplets. Excess precursors 508 may remain in the oil phase 504.

Returning to FIG. 4, at block 415, post-processing treatments may be applied to the microspheres. For example, the post-processing treatments can include adding surface coatings (e.g., hydrolysable silanes, such as aminopropyltriethoxy silane, 3-[Chloro(dimethyl)silyl]propan-1-amine, and similar) to change the solubility of the microspheres (e.g., to make them more easily dispersible in polar media), washing the microspheres in a semi-polar solvent to remove surfactant from the microspheres (e.g., to increase water solubility), exchanging a solvent of the aqueous droplets to remove excess ions and water, and the like. For example, to exchange the solvent, the shells 124 of the microspheres 120 may be porous to allow solvent to be exchanged between the inside and the outside of the shell. The pores may be small enough to prevent the electrophoretic particles from passing through. In particular, pores may be inherently formed based on the production process (i.e., during shell formation by the precursors) of the microspheres 120.

At block 420, the microspheres are collected. For example, the microspheres may be collected via settling or centrifugation, depending on the relative densities of the dispersed and continuous phases. In some examples, the microspheres may also be sorted by size using centrifugation, as settling velocity is highly dependent on the size of the droplet.

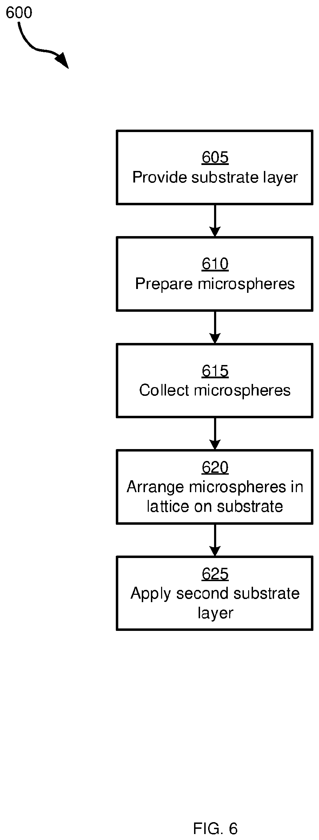

Referring now to FIG. 6, an example method 600 of fabricating an electrophoretic display is depicted.

At block 605, a transparent substrate layer is provided. The substrate layer may be either of the substrate layers 104 or 108, as will be seen below. The substrate layer may be, for example, silicon dioxide, borosilicate glass or any other doped silicate. Other suitable dielectric substrates will also occur to those skilled in the art. In some embodiments, a flexible substrate may be provided. The substrate layer is preferably thin in order to decrease the thickness of the display device. However, the substrate layer is also sufficiently thick to withstand the manufacturing process. In some examples, the substrate layer has a thickness of 0.1 to 1 mm. Preferably the substrate layer has a thickness of about 0.3 mm to about 0.6 mm.

At block 610, electrophoretic microspheres are fabricated. The microspheres may be fabricated, for example, according to the method 400. That is, the microspheres are fabricated by obtaining an emulsion of aqueous droplets dispersed in an oil phase. Specifically, the aqueous droplets include electrophoretic particles. Organometallic precursors may then be added to the emulsion to form shells at respective surfaces of each aqueous droplet to form the microspheres.

At block 615, the microspheres are collected, for example via settling or centrifugation. In some examples, the microspheres may also be sorted by size using centrifugation, as settling velocity is highly dependent on the size of the microsphere. Further, a subset of microspheres for use in the display may be selected. For example, the subset of microspheres may be selected to have a dispersity index of between about 1 and about 1.2.

At block 620, the microspheres are arranged into a lattice on the substrate. The lattice may include one or more layers of microspheres, and preferably, between 7 layers and 100 layers. The lattice may be, for example, a face-centered cubic packing arrangement or a hexagonal close packing arrangement. In other examples, the lattice may be a mixture of the above packing arrangements, or a different packing arrangement.

The lattice may be arranged, for example, via settling and centrifugation of a concentrated suspension of the microspheres. In some examples, the settling and centrifugation may be aided by small amplitude vibrations. In other examples, the microspheres may be suspended in a mixture of solvents, including at least one volatile diluent. The suspension may be spread over the substrate to produce a uniform film on the substrate. The high volatility diluent is allowed to evaporate, during which time the film is compressed to its final thickness by surface tension, forming a lattice in the process.

In some examples, for example in either of the above lattice arrangement processes, the suspension may further include a spacer material, such as uniformly sized silica spheres with a diameter equal to the desired thickness.

In other examples, other suitable processes for arranging the microspheres into a lattice are contemplated.

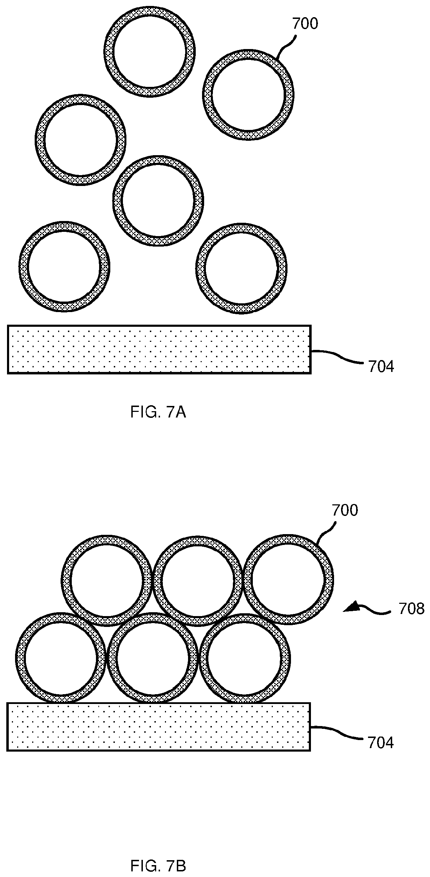

For example, referring to FIG. 7A, a collection of microspheres 700 is deposited onto a substrate 704. In FIG. 7B, the microspheres are arranged into a lattice 708.

Returning to FIG. 6, at block 625, another substrate layer may be applied over the lattice. In some examples, the substrate layer may be the outer substrate 104 (or the inner substrate 108, as applicable). In other examples, the substrate layer may be an intermediary layer on which additional microspheres may be arranged in an additional lattice to form an additional layer. In other examples, the substrate layer may be coated on one or both sides with a transparent conductive material such as indium tin oxide to act as an electrode. The substrate may also have electronic controlling devices patterned onto it which form connections to transparent conductors to drive the sub-pixel assembly.

Advantageously, the microspheres may be deposited as a liquid in the same manner as existing liquid crystal display manufacturing processes. Further, the electrophoretic microspheres reduce the need for polarizers, color filters, and layers to align the liquid crystals in a specific direction. Rather, the microspheres may be stacked in layers to allow for richer color capabilities.

The scope of the claims should not be limited by the embodiments set forth in the above examples but should be given the broadest interpretation consistent with the description as a whole.

## Claims

1. A display device comprising:
an outer substrate;
an inner substrate;
a first electrode and a second electrode disposed between the inner substrate and the outer substrate in a spaced apart relationship; and
a plurality of microspheres between the first and second electrodes, each microsphere comprising a spherical shell enclosing an electrophoretic media; and
wherein the electrophoretic media comprises a first chemical entity and a second chemical entity, wherein the first and second chemical entities are adapted to reversibly interact to switch between a separated state having first light absorption characteristics and an optically active complex state having second light absorption characteristics in response to a change in an electromagnetic field applied to the electrophoretic media by the first and second electrodes to change an optical property of the electrophoretic media; and
wherein incident light is configured to pass through the display device, wherein wavelengths of the incident light are absorbed according to the first or second light absorption characteristics.

2. The display device of claim 1, wherein each microsphere has a diameter of between about 100 nm to about 20 µm.

3. The display device of claim 1, wherein each microsphere has a diameter of between about 300 nm to about 1 µm.

4. The display device any one of claims 1 to 3, wherein a dispersity index of the plurality of microspheres is between about 1 and 1.2.

5. The display device of any one of claims 1 to 4, wherein a thickness of the shell of each microsphere is between about 5 nm to about 80 nm.

6. The display device of any one of claims 1 to 5, further comprising a layer structure to contain the plurality of microspheres between the first and second electrodes, and wherein the plurality of microspheres are arranged in a lattice within the layer structure.

7. The display device of claim 6, wherein the lattice comprises one of: a face-centered cubic packing arrangement or a hexagonal close packing arrangement.

8. The display device of claim 6 or claim 7, further comprising additional layer structures arranged substantially parallel to the layer structure to contain additional microspheres between the first and second electrodes.

9. A method of fabricating microspheres for a transmissive electrophoretic display, the method comprising:
obtaining an emulsion of aqueous droplets dispersed in an oil phase, the aqueous droplets including an electrophoretic media, the electrophoretic media comprising a first chemical entity and a second chemical entity, wherein the first and second chemical entities are adapted to reversibly interact to switch between a separated state having first light absorption characteristics and an optically active complex state having second light absorption characteristics in response to a change in an electromagnetic field applied to the electrophoretic media to change an optical property of the electrophoretic media;
adding precursors to the emulsion; and
forming shells at respective surfaces of each aqueous droplet, wherein the shells are formed via reactions of the precursors at the respective surfaces of each aqueous droplet.

10. The method of claim 9, wherein the aqueous droplets have a dispersity index of between about 1 and about 1.2.

11. The method of claim 9 or claim 10, wherein obtaining the emulsion comprises:
adding an aqueous phase to the oil the phase in presence of a surfactant to form a coarse emulsion; and
shearing the coarse emulsion to form the aqueous droplets.

12. The method of claim **11,** wherein shearing the coarse emulsion comprises one or more of:
subjecting coarse emulsion to a high-shear Couette flow to fracture the aqueous phase into the aqueous droplets;
passing the coarse emulsion through a homogenizer,
passing the coarse emulsion through porous membranes; and
passing the coarse emulsion through microfluidics devices.

13. The method of any one of claims 9 to 12, wherein the aqueous droplets further include catalysts to promote formation of the shells by the precursors at the respective surfaces of each aqueous droplet.

14. The method of any one of claims 9 to 13, further comprising, prior to adding the precursors, diluting the emulsion with additional oil phase and surfactant.

15. The method of any one of claims 9 to 14, further comprising agitating the emulsion, and allowing the emulsion to react for between about 2 minutes and about 24 hours to form the shells at the respective surfaces of each aqueous droplet.

16. The method of any one of claims 9 to 15, further comprising adding surface coatings to change solubility of the microspheres.

17. The method of any one of claims 9 to 16, further comprising washing the microspheres in a semi-polar solvent to remove surfactant from the microspheres.

18. The method of any one of claims 9 to 17, further comprising exchanging a solvent of the aqueous droplets to remove excess ions and water.

19. The method of any one of claims 9 to 18, further comprising collecting the microspheres via settling or centrifugation.

20. A method of fabricating a transmissive display device, the method comprising:
providing a substrate layer;
obtaining an emulsion of aqueous droplets dispersed in an oil phase, the aqueous droplets including an electrophoretic media, the electrophoretic media comprising a first chemical entity and a second chemical entity, wherein the first and second chemical entities are adapted to reversibly interact to switch between a separated state having first light absorption characteristics and an optically active complex state having second light absorption characteristics in response to a change in an electromagnetic field applied to the electrophoretic media to change an optical property of the electrophoretic media;
adding precursors to the emulsion;
forming shells at respective surfaces of each aqueous droplet, wherein the shells are formed via reactions of the organometallic precursors at the respective surfaces of each aqueous droplet to form microspheres;
collecting the microspheres via settling or centrifugation; and
arranging a plurality of the microspheres into a lattice on the substrate.

21. The method of claim 20, further comprising:
sorting the microspheres by size using centrifugation; and
wherein the plurality of the microspheres is selected to have a dispersity index of between about 1 and about 1.2.

22. The method of claim 20 or claim 21, the lattice comprises one of: a face-centered cubic packing arrangement, a hexagonal close packing arrangement or a combination.

23. The method of any one of claims 20 to 22, further comprising applying a second substrate layer on the lattice.

24. The method of any one of claims 20 to 23, further comprising:
applying an intermediary layer on the lattice; and
arranging additional microspheres into an additional lattice on the intermediary layer.

## Patentansprüche

1. Anzeigevorrichtung, umfassend:
ein äußeres Substrat;
ein inneres Substrat; eine erste Elektrode und eine zweite Elektrode, die zwischen dem inneren Substrat und dem äußeren Substrat in einer beabstandeten Beziehung angeordnet sind; und
eine Vielzahl von Mikrokügelchen zwischen der ersten und der zweiten Elektrode, wobei jedes Mikrokügelchen eine kugelförmige Hülle umfasst, die ein elektrophoretisches Medium umschließt; und
wobei das elektrophoretische Medium eine erste chemische Einheit und eine zweite chemische Einheit umfasst, wobei die erste und die zweite chemische Einheit angepasst sind, um reversibel zu interagieren, um zwischen einem getrennten Zustand, der erste Lichtabsorptionscharakteristiken aufweist, und einem optisch aktiven komplexen Zustand, der zweite Lichtabsorptionscharakteristiken aufweist, als Reaktion auf eine Änderung in einem elektromagnetischen Feld, das durch die erste und die zweite Elektrode an das elektrophoretische Medium angelegt wird, umzuschalten, um eine optische Eigenschaft des elektrophoretischen Mediums zu ändern; und
wobei einfallendes Licht konfiguriert ist, um durch die Anzeigevorrichtung hindurchzugehen, wobei Wellenlängen des einfallenden Lichts gemäß der ersten oder der zweiten Lichtabsorptionscharakteristik absorbiert werden.

2. Anzeigevorrichtung nach Anspruch 1, wobei jedes Mikrokügelchen einen Durchmesser zwischen etwa 100 nm und etwa 20 µm aufweist.

3. Anzeigevorrichtung nach Anspruch 1, wobei jedes Mikrokügelchen einen Durchmesser zwischen etwa 300 nm und etwa 1 µm aufweist.

4. Anzeigevorrichtung nach einem der Ansprüche 1 bis 3, wobei ein Dispersionsindex der mehreren Mikrokügelchen zwischen etwa 1 und 1,2 liegt.

5. Anzeigevorrichtung nach einem der Ansprüche 1 bis 4, wobei eine Dicke der Hülle jedes Mikrokügelchen zwischen etwa 5 nm und etwa 80 nm liegt.

6. Anzeigevorrichtung nach einem der Ansprüche 1 bis 5, ferner umfassend eine Schichtstruktur, um die mehreren Mikrokügelchen zwischen der ersten und der zweiten Elektrode zu enthalten, und wobei die mehreren Mikrokügelchen in einem Gitter innerhalb der Schichtstruktur angeordnet sind.

7. Anzeigevorrichtung nach Anspruch 6, wobei das Gitter eines der Folgenden umfasst: eine flächenzentrierte kubische Packungsanordnung oder eine hexagonale enge Packungsanordnung.

8. Anzeigevorrichtung nach Anspruch 6 oder Anspruch 7, ferner umfassend zusätzliche Schichtstrukturen, die im Wesentlichen parallel zu der Schichtstruktur angeordnet sind, um zusätzliche Mikrokügelchen zwischen der ersten und der zweiten Elektrode zu enthalten.

9. Verfahren zum Herstellen von Mikrokügelchen für eine transmissive elektrophoretische Anzeige, wobei das Verfahren Folgendes umfasst:
Erhalten einer Emulsion von wässrigen Tröpfchen, die in einer Ölphase dispergiert sind, wobei die wässrigen Tröpfchen ein elektrophoretisches Medium beinhalten, wobei das elektrophoretische Medium eine erste chemische Einheit und eine zweite chemische Einheit umfasst, wobei die erste und die zweite chemische Einheit angepasst sind, um reversibel zu interagieren, um zwischen einem getrennten Zustand, der erste Lichtabsorptionscharakteristiken aufweist, und einem optisch aktiven komplexen Zustand, der zweite Lichtabsorptionscharakteristiken aufweist, als Reaktion auf eine Änderung in einem elektromagnetischen Feld, das an das elektrophoretische Medium angelegt wird, umzuschalten; Zugeben von Vorläuferstoffen zu der Emulsion; und Bilden von Hüllen an den jeweiligen Oberflächen jedes wässrigen Tröpfchens, wobei die Hüllen durch Reaktionen der Vorläuferstoffe an den jeweiligen Oberflächen jedes wässrigen Tröpfchens gebildet werden.

10. Verfahren nach Anspruch 9, wobei die wässrigen Tröpfchen einen Dispersionsindex zwischen etwa 1 und etwa 1,2 aufweisen.

11. Verfahren nach Anspruch 9 oder Anspruch 10, wobei das Erhalten der Emulsion Folgendes umfasst: Zugeben einer wässrigen Phase zu der Ölphase in Gegenwart eines Tensids, um eine grobe Emulsion zu bilden; und Scheren der groben Emulsion, um die wässrigen Tröpfchen zu bilden.

12. Verfahren nach Anspruch 11, wobei das Scheren der groben Emulsion eines oder mehrere der Folgenden umfasst: Unterziehen der groben Emulsion einer Hochscher-Couette-Strömung, um die wässrige Phase in die wässrigen Tröpfchen zu brechen; Leiten der groben Emulsion durch einen Homogenisator; Leiten der groben Emulsion durch poröse Membranen; und Leiten der groben Emulsion durch Mikrofluidikvorrichtungen.

13. Verfahren nach einem der Ansprüche 9 bis 12, wobei die wässrigen Tröpfchen ferner Katalysatoren beinhalten, um die Bildung der Hüllen durch die Vorläuferstoffe an den jeweiligen Oberflächen jedes wässrigen Tröpfchens zu fördern.

14. Verfahren nach einem der Ansprüche 9 bis 13, ferner umfassend, vor dem Zugeben der Vorläuferstoffe, das Verdünnen der Emulsion mit zusätzlicher Ölphase und Tensid.

15. Verfahren nach einem der Ansprüche 9 bis 14, ferner umfassend das Rühren der Emulsion und Zulassen, dass die Emulsion für zwischen etwa 2 Minuten und etwa 24 Stunden reagiert, um die Hüllen an den jeweiligen Oberflächen jedes wässrigen Tröpfchens zu bilden.

16. Verfahren nach einem der Ansprüche 9 bis 15, ferner umfassend das Zugeben von Oberflächenbeschichtungen, um die Löslichkeit der Mikrokügelchen zu ändern.

17. Verfahren nach einem der Ansprüche 9 bis 16, ferner umfassend das Waschen der Mikrokügelchen in einem semipolaren Lösungsmittel, um Tensid aus den Mikrokügelchen zu entfernen.

18. Verfahren nach einem der Ansprüche 9 bis 17, ferner umfassend das Austauschen eines Lösungsmittels der wässrigen Tröpfchen, um überschüssige Ionen und Wasser zu entfernen.

19. Verfahren nach einem der Ansprüche 9 bis 18, ferner umfassend das Sammeln der Mikrokügelchen durch Absetzen oder Zentrifugation.

20. Verfahren zum Herstellen einer transmissiven Anzeigevorrichtung, wobei das Verfahren das Bereitstellen einer Substratschicht umfasst;
Erhalten einer Emulsion von wässrigen Tröpfchen, die in einer Ölphase dispergiert sind, wobei die wässrigen Tröpfchen ein elektrophoretisches Medium beinhalten, wobei das elektrophoretische Medium eine erste chemische Einheit und eine zweite chemische Einheit umfasst, wobei die erste und die zweite chemische Einheit angepasst sind, um reversibel zu interagieren, um zwischen einem getrennten Zustand, der erste Lichtabsorptionscharakteristiken aufweist, und einem optisch aktiven komplexen Zustand, der zweite Lichtabsorptionscharakteristiken aufweist, als Reaktion auf eine Änderung in einem elektromagnetischen Feld, das an das elektrophoretische Medium angelegt wird, umzuschalten, um eine optische Eigenschaft des elektrophoretischen Mediums zu ändern; Zugeben von Vorläuferstoffen zu der Emulsion;
Bilden von Hüllen an den jeweiligen Oberflächen jedes wässrigen Tröpfchens, wobei die Hüllen durch Reaktionen der metallorganischen Vorläuferstoffe an den jeweiligen Oberflächen jedes wässrigen Tröpfchens gebildet werden, um Mikrokügelchen zu bilden; Sammeln der Mikrokügelchen durch Absetzen oder Zentrifugation; und Anordnen mehrerer der Mikrokügelchen in einem Gitter auf dem Substrat.

21. Verfahren nach Anspruch 20, ferner umfassend: Sortieren der Mikrokügelchen nach Größe unter Verwendung von Zentrifugation; und wobei die mehreren Mikrokügelchen ausgewählt sind, um einen Dispersionsindex zwischen etwa 1 und etwa 1,2 aufzuweisen.

22. Verfahren nach Anspruch 20 oder Anspruch 21, wobei das Gitter eines der Folgenden umfasst: eine flächenzentrierte kubische Packungsanordnung, eine hexagonale enge Packungsanordnung oder eine Kombination.

23. Verfahren nach einem der Ansprüche 20 bis 22, ferner umfassend das Aufbringen einer zweiten Substratschicht auf das Gitter.

24. Verfahren nach einem der Ansprüche 20 bis 23, ferner umfassend: Aufbringen einer Zwischenschicht auf das Gitter; und Anordnen zusätzlicher Mikrokügelchen in einem zusätzlichen Gitter auf der Zwischenschicht.

## Revendications

1. Dispositif d'affichage comprenant :
un substrat externe;
un substrat interne;
une première électrode et une deuxième électrode disposées à distance l'une de l'autre entre le substrat interne et le substrat externe; et
une pluralité de microsphères entre la première et la deuxième électrodes, chaque microsphère comprenant une enveloppe sphérique renfermant un milieu électrophorétique;
et dans lequel le milieu électrophorétique comprend une première entité chimique et une deuxième entité chimique, lesdites première et deuxième entités chimiques étant configurées pour interagir de manière réversible de façon à commuter entre un état séparé présentant des premières propriétés d'absorption de la lumière et un état complexe optiquement actif présentant des deuxièmes propriétés d'absorption de la lumière en réponse à une variation d'un champ électromagnétique appliqué au milieu électrophorétique par la première et la deuxième électrodes de manière à modifier une propriété optique du milieu électrophorétique;
et dans lequel la lumière incidente est configurée pour traverser le dispositif d'affichage, les longueurs d'onde de la lumière incidente étant absorbées conformément aux premières ou aux deuxièmes propriétés d'absorption de la lumière.

2. Dispositif d'affichage selon la revendication 1, dans lequel chaque microsphère présente un diamètre compris entre environ 100 nm et environ 20 µm.

3. Dispositif d'affichage selon la revendication 1, dans lequel chaque microsphère présente un diamètre compris entre environ 300 nm et environ 1 µm.

4. Dispositif d'affichage selon l'une des revendications 1 à 3, dans lequel un indice de dispersion de la pluralité de microsphères est compris entre environ 1 et 1,2.

5. Dispositif d'affichage selon l'une des revendications 1 à 4, dans lequel l'épaisseur de l'enveloppe de chaque microsphère est comprise entre environ 5 nm et environ 80 nm.

6. Dispositif d'affichage selon l'une des revendications 1 à 5, comprenant en outre une structure en couches configurée pour contenir la pluralité de microsphères entre la première et la deuxième électrodes, et dans lequel la pluralité de microsphères est disposée en réseau à l'intérieur de la structure en couches.

7. Dispositif d'affichage selon la revendication 6, dans lequel le réseau comprend soit un empilement cubique à faces centrées, soit un empilement hexagonal compact.

8. Dispositif d'affichage selon la revendication 6 ou 7, comprenant en outre des structures en couches supplémentaires disposées sensiblement parallèlement à ladite structure en couches afin de contenir des microsphères supplémentaires entre la première et la deuxième électrodes.

9. Procédé de fabrication de microsphères pour un dispositif d'affichage électrophorétique transmissif, ledit procédé comprenant:
l'obtention d'une émulsion de gouttelettes aqueuses dispersées dans une phase huileuse, les gouttelettes aqueuses contenant un milieu électrophorétique, ledit milieu électrophorétique comprenant une première entité chimique et une deuxième entité chimique, lesdites première et deuxième entités chimiques étant configurées pour interagir de manière réversible de façon à commuter entre un état séparé présentant des premières propriétés d'absorption de la lumière et un état complexe optiquement actif présentant des deuxièmes propriétés d'absorption de la lumière en réponse à une variation d'un champ électromagnétique appliqué au milieu électrophorétique de manière à modifier une propriété optique du milieu électrophorétique;
l'ajout de précurseurs à l'émulsion; et
la formation d'enveloppes aux surfaces respectives de chaque gouttelette aqueuse, lesdites enveloppes étant formées par réaction des précurseurs aux surfaces respectives de chaque gouttelette aqueuse.

10. Procédé selon la revendication 9, dans lequel les gouttelettes aqueuses présentent un indice de dispersion compris entre environ 1 et environ 1,2.

11. Procédé selon la revendication 9 ou 10, dans lequel l'obtention de l'émulsion comprend :
l'ajout d'une phase aqueuse à la phase huileuse en présence d'un tensioactif afin de former une émulsion grossière; et
le cisaillement de l'émulsion grossière afin de former les gouttelettes aqueuses.

12. Procédé selon la revendication 11, dans lequel le cisaillement de l'émulsion grossière comprend une ou plusieurs des opérations suivantes:
soumettre l'émulsion grossière à un écoulement de Couette à fort cisaillement afin de fragmenter la phase aqueuse en gouttelettes aqueuses;
faire passer l'émulsion grossière à travers un homogénéisateur;
faire passer l'émulsion grossière à travers des membranes poreuses;
faire passer l'émulsion grossière à travers des dispositifs microfluidiques.

13. Procédé selon l'une des revendications 9 à 12, dans lequel les gouttelettes aqueuses comprennent en outre des catalyseurs destinés à favoriser la formation des enveloppes par les précurseurs aux surfaces respectives de chaque gouttelette aqueuse.

14. Procédé selon l'une des revendications 9 à 13, comprenant en outre, avant l'ajout des précurseurs, la dilution de l'émulsion avec une phase huileuse supplémentaire et un tensioactif.

15. Procédé selon l'une des revendications 9 à 14, comprenant en outre l'agitation de l'émulsion et le maintien de l'émulsion en réaction pendant une durée comprise entre environ 2 minutes et environ 24 heures afin de former les enveloppes aux surfaces respectives de chaque gouttelette aqueuse.

16. Procédé selon l'une des revendications 9 à 15, comprenant en outre l'ajout de revêtements de surface afin de modifier la solubilité des microsphères.

17. Procédé selon l'une des revendications 9 à 16, comprenant en outre le lavage des microsphères dans un solvant semi-polaire afin d'éliminer le tensioactif des microsphères.

18. Procédé selon l'une des revendications 9 à 17, comprenant en outre le remplacement du solvant des gouttelettes aqueuses afin d'éliminer les ions en excès et l'eau.

19. Procédé selon l'une des revendications 9 à 18, comprenant en outre la collecte des microsphères par décantation ou centrifugation.

20. Procédé de fabrication d'un dispositif d'affichage transmissif, ledit procédé comprenant :
la fourniture d'une couche de substrat;
l'obtention d'une émulsion de gouttelettes aqueuses dispersées dans une phase huileuse, les gouttelettes aqueuses contenant un milieu électrophorétique, ledit milieu électrophorétique comprenant une première entité chimique et une deuxième entité chimique, lesdites première et deuxième entités chimiques étant configurées pour interagir de manière réversible de façon à commuter entre un état séparé présentant des premières propriétés d'absorption de la lumière et un état complexe optiquement actif présentant des deuxièmes propriétés d'absorption de la lumière en réponse à une variation d'un champ électromagnétique appliqué au milieu électrophorétique de manière à modifier une propriété optique du milieu électrophorétique;
l'ajout de précurseurs à l'émulsion;
la formation d'enveloppes aux surfaces respectives de chaque gouttelette aqueuse, lesdites enveloppes étant formées par des réactions des précurseurs organométalliques aux surfaces respectives de chaque gouttelette aqueuse afin de former des microsphères;
la collecte des microsphères par décantation ou centrifugation; et
la disposition d'une pluralité de microsphères en réseau sur le substrat.

21. Procédé selon la revendication 20, comprenant en outre:
le tri des microsphères en fonction de leur taille par centrifugation;
et dans lequel la pluralité de microsphères est sélectionnée de manière à présenter un indice de dispersion compris entre environ 1 et environ 1,2.

22. Procédé selon la revendication 20 ou 21, dans lequel le réseau comprend soit un empilement cubique à faces centrées, soit un empilement hexagonal compact, ou une combinaison de ceux-ci.

23. Procédé selon l'une des revendications 20 à 22, comprenant en outre le dépôt d'une deuxième couche de substrat sur le réseau.

24. Procédé selon l'une des revendications 20 à 23, comprenant en outre:
le dépôt d'une couche intermédiaire sur le réseau; et
la disposition de microsphères supplémentaires dans un réseau supplémentaire sur la couche intermédiaire.
